# DEMANDE DE BREVET EUROPEEN

(11) **EP 1 125 673 A1**
(43) Date de publication de la demande: **22.08.2001**
(21) Numéro de dépôt: 01400281.0
(22) Date de dépôt: 05.02.2001
(51) Int. Cl.: B23K 35/365, B23K 35/40

(54) **Electrode enrobée colorée utilisable en soudage à l'arc et son procédé de fabrication**

(30) Priorité: 10.02.2000 FR 0001669
(71) Demandeur: L'AIR LIQUIDE, SOCIETE ANONYME POUR L'ETUDE ET L'EXPLOITATION DES PROCEDES GEORGES CLAUDE, 75321 Paris Cédex 07 (FR); LA SOUDURE AUTOGENE FRANCAISE, F-75007 Paris (FR)
(72) Inventeur: Bonnet, Christian, 95650 Puiseux-Pontoise (FR); Damagnez, Paul, 51470 St Memmie (FR)
(74) Mandataire: Pittis, Olivier

(57) **Abrégé**

L'invention concerne une électrode (1) enrobée fusible pour soudage à l'arc électrique formée d'une âme métallique centrale (2) entourée d'un enrobage (3) périphérique externe. L'enrobage (3) contient un ou plusieurs constituants colorant de nature minérale ou organique permettant, après séchage et/ou cuisson, de conférer une couleur ou une teinte à l'enrobage qui est fonction de la composition chimique dudit enrobage. Le constituant colorant peut être un ou des oxydes métalliques, de préférence choisi parmi les oxydes de fer, de chrome, de cobalt et leurs mélanges permettant d'obtenir une couleur ou une teinte choisie parmi le rouge, le vert, le bleu, l'orange et leurs nuances. Une électrode ainsi colorée est facilement identifiable par l'opérateur de soudage. L'invention porte aussi sur le procédé de fabrication de cette électrode (1) et son utilisation en soudage à l'arc électrique.

## Description

L'invention concerne une électrode enrobée fusible utilisable dans une opération de soudage à l'arc électrique, notamment dans un atelier ou un chantier de construction.

Habituellement, le choix de l'électrode enrobée fusible la plus adaptée à l'opération de soudage à l'arc devant être réalisée se fait en fonction de plusieurs critères, notamment de la nature du matériau à souder, des propriétés mécaniques des soudures à obtenir et du type de soudure devant être réalisé, par exemple une soudure bout-à-bout, en angle, un raboutage de tubes, à plat, en position...

On comprend donc qu'il est habituel que plusieurs types d'électrodes doivent être utilisés simultanément sur un même site de soudage, c'est-à-dire des électrodes enrobées de compositions différentes et dont la fusion conduit à la réalisation de joints de soudure présentant des caractéristiques techniques très différentes d'une électrode à l'autre.

Or, bien que la désignation commerciale du produit, ainsi que la désignation normalisée soient généralement inscrites sur l'enrobage des électrodes, les risques de confusion et de mauvaise utilisation des produits sont réels et peuvent avoir des conséquences très lourdes, par exemple la réalisation d'un joint de soudure ayant des caractéristiques insuffisantes, notamment en termes de résistance et de ténacité, ce qui peut conduire à une rupture subséquente de la soudure ainsi obtenue.

En effet, les opérations de soudage ayant souvent lieu dans les endroits sombres ou mal éclairés, il peut arriver que la lecture ou le déchiffrage par l'opérateur de la désignation commerciale de l'électrode soit difficile ou erronée et, de là, conduise à des erreurs de choix d'électrode.

De plus, lorsque plusieurs électrodes ayant des compositions différentes et donc conduisant à des soudures ayant des propriétés différentes ont été mélangées, l'opérateur n'a pour le moment d'autre choix que de les passer toutes en revue pour déterminer, en lisant les désignations commerciales des électrodes, de quelles électrodes il s'agit et/ou de trouver l'électrode la plus adaptée à l'opération de soudage qu'il doit réaliser.

Il a été proposé, parailleurs, notamment par les documents CH-A-614399 et JP-A-50010539 de recouvrir l'électrode d'une couche de peinture colorée. Toutefois, cette solution présente des désavantages. Ainsi, ceci complique le procédé de fabrication de l'électrode en rajoutant des étapes supplémentaires de mise en peinture et de séchage. De plus, la peinture recouvrant les électrodes ne doit pas nuire à la qualité du joint de soudure en y introduisant des éléments néfastes, lors de la fusion de l'électrode pendant le soudage.

En outre, le document US-A-3,453,142 a proposé d'ajouté du dioxyde de titane dans la couche de revêtement de l'électrode de manière à lui conférer une couleur blanche. Toutefois, ce document ne suggère aucune solution pour obtenir d'autres couleurs, tel le rouge, le vert, le bleu, l'orange et leurs nuances.

De là, le problème qui se pose est de permettre à un opérateur soit de distinguer rapidement, c'est-à-dire d'un simple coup d'oeil, qu'il n'y a pas d'erreur quant au choix de l'électrode enrobée à utiliser en regard de l'acier à souder ou de la soudure à réaliser, soit de choisir rapidement une électrode déterminée même lorsque celle-ci est mélangée à d'autres électrodes enrobées ayant des propriétés et/ou des compositions différentes.

La solution apportée par l'invention repose sur une électrode enrobée fusible pour soudage à l'arc électrique formée d'une âme centrale, de préférence métallique, entourée d'au moins un enrobage périphérique coloré, c'est-à-dire un enrobage incorporant un ou plusieurs pigments ou constituants colorés de type minéral ou organique permettant, après séchage et/ou cuisson, de conférer une couleur ou une teinte à au moins une partie dudit enrobage, de préférence choisie parmi le rouge, le vert, le bleu, l'orange et leurs nuances.

Lorsque le constituant colorant est minéral, il est choisi préférentiellement parmi les oxydes métalliques de fer, de chrome, de cobalt et leurs mélanges.

Selon le cas, l'électrode de l'invention peut comprendre l'une ou plusieurs des caractéristiques suivantes :
- ledit constituant colorant permet de conférer une couleur ou teinte qui est fonction de la composition chimique dudit enrobage.
- l'enrobage contient de 0.1% en poids à 5% en poids de constituant colorant par rapport au poids de l'enrobage après cuisson.
- l'électrode est choisie parmi les électrodes de type basique, rutilo-basique, acide, rutile ou cellulosique.
- au moins une partie dudit enrobage comporte plusieurs couleurs ou teintes différentes, de préférence répartie par couches ou par bandes, par exemple des striures ou des alternances de couleurs ou de teintes.
- l'enrobage contient de 0.5% en poids à 5% en poids de constituant colorant minéral par rapport au poids de l'enrobage après cuisson.
- l'enrobage contient de 0.1% en poids à 1% en poids de constituant colorant organique par rapport au poids de l'enrobage après cuisson.

Dit autrement, la présente invention repose sur l'ajout ou l'addition d'un ou plusieurs colorants ou pigments colorants aux constituants de l'enrobage de l'électrode, le ou les pigments permettant de conférer une couleur ou une teinte prédéterminée à l'enrobage de l'électrode enrobée qui est fonction de sa composition et donc des caractéristiques de soudure à obtenir, ce qui permet à un opérateur de différencier instantanément une électrode d'une électrode de composition différente uniquement par son aspect visuel extérieur, c'est-à-dire sa couleur ou sa teinte.

Selon un autre aspect, l'invention porte aussi sur un procédé de fabrication d'une telle électrode enrobée fusible pour soudage à l'arc électrique formée d'une âme centrale entourée d'au moins un enrobage périphérique externe selon l'invention, dans lequel :
(a) on dépose l'enrobage externe contenant au moins un constituant colorant minéral et/ou organique, en particulier au moins un oxyde métallique, et des constituants chimiques sur au moins une partie de la périphérique de ladite électrode, de préférence sur l'âme centrale,
(b) on réalise un séchage et/ou cuisson de enrobage externe à une température inférieure à 600°C, de manière à conférer une couleur ou une teinte à au moins une partie dudit enrobage.

Selon le cas, le procédé de l'invention peut comprendre l'une ou plusieurs des caractéristiques suivantes :
- le séchage et/ou la cuisson est opéré à une température comprise entre 300 et 500°C, et en ce qu'au moins un constituant colorant est minéral.
- le séchage et/ou la cuisson est opéré à une température comprise entre 50 et 200°C, et en ce qu'au moins un constituant colorant est minéral et/ou organique.
- l'enrobage contient des constituants chimiques choisis dans le groupe formé par les composés formateurs de laitier, les composés formateurs de gaz, les éléments d'alliage métallique, les éléments ionisants, les liants et les composés désoxydants.
- l'âme centrale est en métal ou en alliage métallique choisi parmi les aciers doux, les aciers fortement alliés, les alliages de nickel, les alliages de cobalt, les alliages d'aluminium, ou est de type fil fourré.

Selon encore un autre aspect, l'invention concerne aussi l'utilisation d'une électrode fusible pour soudage à l'arc électrique formée d'une âme métallique centrale entourée d'au moins un enrobage périphérique externe au moins en partie coloré ou teinté selon l'invention, dans une opération de soudage à l'arc électrique.

La présente invention va maintenant être décrite plus en détail à l'aide d'exemples de réalisation donnés à titre illustratif mais non limitatif.

### Exemple 1 - Cas des électrodes cuites à haute température

Les électrodes enrobées de type "basique" ou les électrodes destinées au soudage des aciers fortement alliés ou au rechargement de pièce devant résister à l'usure par abrasion, choc, cavitation..... sont généralement conçues pour transférer peu d'hydrogène dans le métal fondu de manière à éviter la formation de porosité dans le joint de soudure.

Pour ces types d'électrodes, il est préférable de réaliser la cuisson à une température généralement située entre environ 320 et 500°C et d'utiliser un ou des colorants minéraux, c'est-à-dire à base de pigments minéraux.

Ainsi, on peut conférer une couleur rouge ou une teinte ou nuance de rouge à l'enrobage de l'électrode en intégrant un ou des colorants à base d'oxydes de fer aux autres constituants chimiques de l'enrobage.

Pour obtenir une couleur rouge, différents pigments accessibles dans le commerce peuvent être empoyés, tels que:
- les oxydes de fer rouge référencés KD300™, P5™ ou RS 300™ disponibles auprès de la Société Oxymine™,
- l'oxyde de fer référencé Bayerrox™ rouge 160 commercialisé par la Société Bayer™, ou
- l'oxyde de fer naturel Malaga Gloria™ commercialisé par la Société Oxidos Del Sur™.

De façon analogue, une couleur verte résultera généralement de l'utilisation de produits à base d'oxydes de chrome, tel que l'oxyde de chrome vert CV40™ disponible auprès de la Société Languedocienne de Soufre et Microns Couleur™.

Par ailleurs, une couleur bleue peut être obtenue à partir de produits contenant des oxydes de cobalt, tel que le Bleu 5100™ de la Société Degussa™.

Enfin, une couleur orange peut être obtenue avec, elle aussi, des produits a base d'oxydes de fer, tel que le produit référencé Bayerrox™ rouge 110 et commercialisé par la Société Bayer™.

### Exemple 2 - Cas des électrodes cuites à basse température

Dans le cas des électrodes de type "rutile" (TiO₂) ou de type "cellulosique", il est préférable de réaliser la cuisson à une température de inférieure ou égale à environ 200°C, généralement située entre environ 100°C et 180°C.

La faible température de cuisson (<200°C) rend alors possible l'utilisation de colorants à base organique en plus des colorants minéraux déjà cités.

Parmi les colorants à base organique utilisables pour colorer l'enrobage de l'électrode, on peut citer, par exemple, les produits suivants :
- le Cyanine Lutetia CS 530™ de la Société Francolor™ permettant d'obtenir une couleur bleue,
- l'Ecarlate Monolite RN™ de la Société Zeneka™ permettant d'obtenir une couleur rouge,
- le Vert Fastogen S™ de la Société DIC™ permettant d'obtenir une couleur verte, ou
- l'Orange Lutetia JN™ de la Société Francolor™ permettant d'obtenir une couleur orange.

L'invention est illustrée sur les figures annexées, données à titre illustratif mais non limitatif.

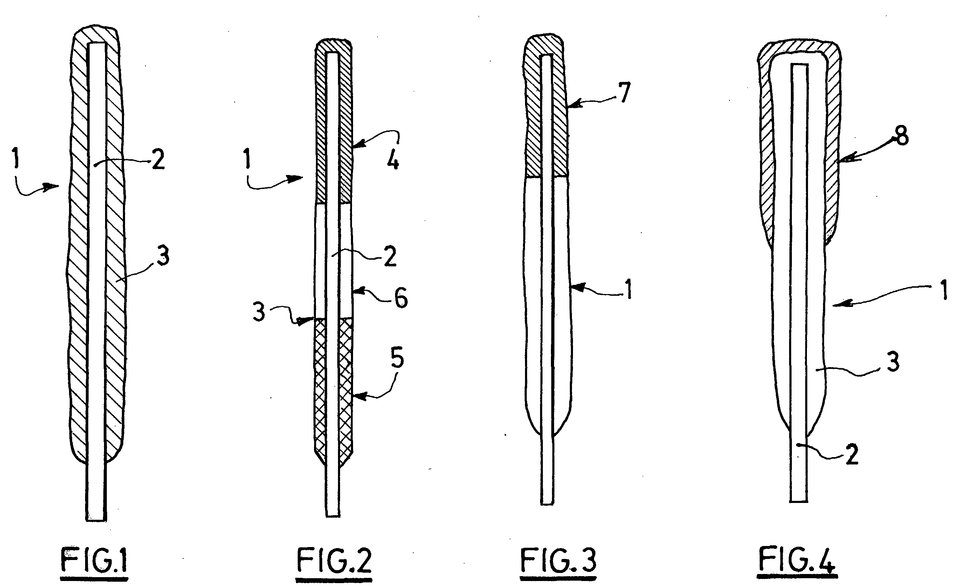

La figure 1 est un schéma en coupe longitudinale d'une électrode 1 enrobée fusible pour soudage à l'arc électrique selon l'invention, de forme allongée et sensiblement cylindrique, formée d'une âme métallique 2 centrale entourée d'un enrobage 3 périphérique externe.

Selon l'invention, l'enrobage 3 externe contient un (ou plusieurs) constituant colorant minéral ou organique permettant, après séchage et/ou cuisson, de conférer une couleur ou une teinte audit enrobage 3, par exemple une couleur rouge ou orange, de manière à permettre de distinguer facilement cette électrode 1, lorsqu'elle est mélangée à d'autres électrodes ayant des propriétés de soudage différentes.

L'enrobage 3 contient des constituants chimiques permettant de conférer les propriétés de soudage particulières à ladite électrode 1.

Ainsi, l'enrobage peut contenir des composés formateurs de laitier, tels des oxydes ou des fluorures, des composés formateurs de gaz, tels des carbonates, des éléments d'alliage métallique, tels Fe, FeMn, SiMn, FeSi, FeCr, Cr, FeMo, Mo, Ni...., des éléments ionisants, tels Na, K, Li...., des liants, tels le silicate de Na, de Li, de K...., des composés désoxydants, tels Al, Mg, Zr..., et des éléments colorants minéraux et/ou organiques selon l'invention permettant de conférer une couleur ou une teinte à l'électrode.

Par ailleurs, l'âme centrale 2 de l'électrode 1 est en métal ou en alliage métallique, par exemple en acier doux ou en acier fortement allié, en alliage de nickel, de cobalt, d'aluminium...... ou est de type fil fourré.

La figure 2 est un schéma en coupe longitudinale d'un second mode de réalisation d'une électrode 1 enrobée fusible selon l'invention, formée, là encore, d'une âme métallique 2 centrale entourée d'un enrobage 3 périphérique externe.

Cependant, dans ce cas, l'enrobage 3 externe contient un ou plusieurs constituants colorants minéraux et/ou organiques permettant de conférer des couleurs ou teintes audit enrobage 3, ces différents constituants colorants étant répartis en bandes colorées 4, 5 sur l'enrobage.

Ici, la bande colorée 4 est séparée de la bande colorée 5 par une partie 6 non colorée, c'est-à-dire grisâtre.

La bande colorée 4 est, par exemple de couleur rouge, alors que la bande colorée 5 est elle de couleur verte.

Toutefois, il est aussi possible de colorer la partie intermédiaire en une autre couleur, par exemple en bleu. Les colorants utilisables pour obtenir de telles couleurs sont donnés dans les exemples ci-dessus.

La figure 3 représente encore un autre mode de réalisation d'une électrode 1 selon l'invention, dans lequel l'enrobage 3 externe n'est colorée qu'à son extrémité terminale 7 contient au moyen d'un ou d'un mélange de plusieurs constituants colorants minéraux et/ou organiques permettant de conférer des couleurs ou teintes audit enrobage 3.

La figure 4 représente encore un autre mode de réalisation d'une électrode 1 selon l'invention, dans lequel l'enrobage 3 externe n'est colorée que sur une partie de sa superficie externe par dépôt d'une couche colorante 8.

## Revendications

1. Electrode (1) enrobée fusible pour soudage à l'arc électrique formée d'une âme (2) centrale entourée d'au moins un enrobage (3) périphérique, caractérisé en ce qu'au moins une partie de l'enrobage (3) contient au moins un constituant colorant minéral choisi parmi les oxydes de fer, de chrome, de cobalt et leurs mélanges, ou au moins un constituant colorant organique, ledit constituant colorant minéral ou organique permettant, après séchage et/ou cuisson, de conférer une couleur ou une teinte à au moins une partie dudit enrobage (3).

2. Electrode (1) enrobée fusible pour soudage à l'arc électrique formée d'une âme (2) centrale entourée d'au moins un enrobage (3) périphérique, caractérisé en ce qu'au moins une partie de l'enrobage (3) contient au moins un constituant colorant minéral ou organique, ledit constituant colorant permettant, après séchage et/ou cuisson, de conférer une couleur ou une teinte choisie parmi le rouge, le vert, le bleu, l'orange et leurs nuances, à au moins une partie dudit enrobage (3).

3. Electrode selon l'une des revendications 1 ou 2, caractérisée en ce que ledit constituant colorant permet de conférer une couleur ou teinte qui est fonction de la composition chimique dudit enrobage (3).

4. Electrode selon l'une des revendications 1 à 3, caractérisée en ce que l'enrobage (3) contient de 0.1% en poids à 1% en poids de constituant colorant organique par rapport au poids de l'enrobage (3) ou de 0.1% en poids à 5% en poids de constituant colorant minéral par rapport au poids de l'enrobage (3).

5. Electrode selon l'une des revendications 1, 3 ou 4, caractérisée en ce qu'au moins une partie dudit enrobage a une couleur ou une teinte choisie parmi le rouge, le vert, le bleu, l'orange et leurs nuances.

6. Electrode selon l'une des revendications 1 à 5, caractérisée en ce que l'électrode est choisie parmi les électrodes de type basique, rutilo-basique, acide, rutile ou cellulosique.

7. Electrode selon l'une des revendications 1 à 6, caractérisée en ce qu'au moins une partie dudit enrobage (3) comporte plusieurs couleurs ou teintes différentes, de préférence répartie par couches (8) ou par bandes (4, 5, 7).

8. Electrode selon l'une des revendications 1 à 7, caractérisée en ce que l'enrobage (3) contient de 0.5% en poids à 5% en poids de constituant colorant minéral par rapport au poids de l'enrobage (3) après cuisson.

9. Procédé de fabrication d'une électrode (1) fusible pour soudage à l'arc électrique formée d'une âme centrale (2) entourée d'au moins un enrobage (3) périphérique externe selon l'une des revendications 1 à 8, dans lequel :
(a) on dépose l'enrobage externe contenant au moins un constituant colorant minéral et/ou organique, en particulier au moins un oxyde métallique, et des constituants chimiques sur au moins une partie de la périphérique de ladite électrode (1), de préférence sur l'âme centrale (2),
(b) on réalise un séchage et/ou cuisson de enrobage (3) externe à une température inférieure à 600°C, de manière à conférer une couleur ou une teinte à au moins une partie dudit enrobage (3).

10. Procédé de fabrication selon la revendication 9, caractérisé en ce que le séchage et/ou la cuisson est opéré à une température comprise entre 300 et 500°C, et en ce qu'au moins un constituant colorant est minéral.

11. Procédé de fabrication selon la revendication 9, caractérisé en ce que le séchage et/ou la cuisson est opéré à une température comprise entre 50 et 200°C, et en ce qu'au moins un constituant colorant est minéral et/ou organique.

12. Procédé de fabrication selon la revendication 9, caractérisé en ce que l'enrobage (3) contient des constituants chimiques choisis dans le groupe formé par les composés formateurs de laitier, les composés formateurs de gaz, les éléments d'alliage métallique, les éléments ionisants, les liants et les composés désoxydants et/ou en ce que l'âme centrale (2) est en métal ou en alliage métallique choisi parmi les aciers doux, les aciers fortement alliés, les alliages de nickel, les alliages de cobalt, les alliages d'aluminium, ou est de type fil fourré.

13. Utilisation d'une électrode fusible (1) pour soudage à l'arc électrique formée d'une âme (2) centrale entourée d'au moins un enrobage (3) périphérique externe au moins en partie coloré ou teinté selon l'une des revendications 1 à 8, dans une opération de soudage à l'arc électrique.
